**Europäisches Patentamt**

**European Patent Office**

**Office européen des brevets**

(19)

(11) Veröffentlichungsnummer: **0 035 592**
**A1**

(12) **EUROPÄISCHE PATENTANMELDUNG**

(21) Anmeldenummer: **80106943.6**

(22) Anmeldetag: **11.11.80**

(51) Int. Cl.³: **H 04 Q 7/00**

(30) Priorität: **11.03.80 DE 3009203**

(43) Veröffentlichungstag der Anmeldung:
**16.09.81 Patentblatt 81/37**

(84) Benannte Vertragsstaaten:
**AT BE DE FR GB IT NL**

(71) Anmelder: **ROBERT BOSCH GMBH**
**Postfach 50**
**D-7000 Stuttgart 1(DE)**

(72) Erfinder: **Bitar, Omar, Dipl.-Ing.**
**Kaiserdamm 111**
**D-1000 Berlin 19(DE)**

(74) Vertreter: **Schmidt, Hans-Ekhardt**
**Robert Bosch GmbH Geschäftsbereich Elektronik**
**Patent- und Lizenzabteilung Forckenbeckstrasse 9-13**
**D-1000 Berlin 33(DE)**

(54) **Verfahren und Vorrichtung zur Auswertung von Folgetonsignalen für den Empfänger eines Sprechfunkgerätes.**

(57) Es wird ein Tonrufauswerter für einen Funkempfänger vorgeschlagen, der zum Auswerten eines für den Empfänger charakteristischen mehrstelligen Selektivrufes und eines für mehrere Funkempfänger bestimmten Gruppenrufes dient. Der Gruppenruf besteht aus einem Selektivruf, der an einer bestimmten Stelle anstatt der Selektivruffrequenz eine Gruppenruffrequenz aufweist. Ist der Tonrufauswerter auf eine Stelle des Selektivrufs umgeschaltet, in der die Gruppenruffrequenz erwartet wird, dann wird der Tonrufauswerter zunächst auf die Selektivruffrequenz dieser Stelle umgeschaltet. Trifft innerhalb einer ersten bestimmten Zeitdauer (tw) die Selektivruffrequenz nicht ein, so wird der Tonrufauswerter auf die Gruppenruffrequenz umgeschaltet. Sollte die Gruppenruffrequenz innerhalb einer zweiten bestimmten Dauer, die größer als die erste Dauer ist, nicht eintreffen, so wird der Tonrufauswerter in die Ausgangsstellung zurückgeführt. Wird dagegen die Selektivruffrequenz der gewählten Stelle oder die Gruppenruffrequenz als richtig erkannt, dann werden diese Frequenzen wie üblich ausgewertet.

./...

COMPLETE DOCUMENT

Croydon Printing Company Ltd.

Fig. 1

4/80
EK/PLI Scht/Li
11. März 1980

ROBERT BOSCH GMBH, 7000 Stuttgart 1

Tonrufauswerter für den Empfänger eines Sprechfunkgerätes

Stand der Technik

Die Erfindung geht aus von einem Tonrufauswerter nach der Gattung des Hauptanspruchs.

Ein derartiger Tonrufauswerter ist aus der DE-OS 22 34 952 bekannt. Der bekannte Tonrufauswerter weist ein Filter in Form eines umschaltbaren Resonanzkreises aus einer Spule mit Anzapfungen und einem einzigen Kondensator auf. Die Umschaltung des Resonanzkreises auf die verschiedenen Tonfrequenzen des Selektivrufs übernimmt ein elektronischer Zähler, dessen Ausgänge nacheinander mit je einer einer Tonfrequenz des Selektivrufs zugeordneten Spulenanzapfung verbunden werden.

Wenn die zu den Frequenzen des Selektivrufs unterschiedliche Gruppenruffrequenz erwartet wird, dann wird ein Umschalter aktiviert, der seinen Schaltzustand periodisch mit einer Taktdauer wechselt, die kurz gegen die Dauer einer einzigen

- 2 -

Selektivruffrequenz ist. Der Umschalter schaltet zwischen
dem der Selektivruffrequenz entsprechenden Spulenteil und
dem der Gruppenruffrequenz entsprechenden Spulenteil um.
Nach Erkennen der jeweils anstehenden Selektivruffrequenz
oder Gruppenruffrequenz wird die Umschaltung bis zum Ende
der Auswertung der Frequenz unterbrochen.

Nach dem Auswerten einer Frequenz wird das Filter über
einen Zähler noch während der Zeit, in der die Frequenz am
Eingang des Auswerters ansteht, auf die nächste Selektivruffrequenz umgeschaltet.

Vorteile der Erfindung

Der erfindungsgemäße Tonrufauswerter mit den kennzeichnenden
Merkmalen des Hauptanspruchs hat gegenüber dem Stand der
Technik den Vorteil, daß bei einer Selektivrufauswertung
überhaupt keine Umschaltung auf die Gruppenruffrequenz
stattfindet und daß bei der Gruppenrufauswertung, bei der
eine bestimmte Stelle des Selektivrufs mit einer Gruppenruffrequenz belegt ist, zu einem festgelegten Zeitpunkt, zum
Beispiel 15 Millisekunden nach dem Tonwechsel, von einer Selektivruffrequenz auf die Gruppenruffrequenz umgeschaltet wird,
bis die Gruppenruffrequenz ausgewertet ist.

Weiterhin hat der Tonrufauswerter den Vorteil, daß die Realisierung der Schaltung mit einfachen Mitteln, das heißt ohne
eng tolerierte Bauelemente, möglich ist. Ein weiterer Vorteil
besteht darin, daß bei der Auswertung eines Selektivrufs kein
Zeitverlust durch irgendeine Umschaltung auf die in dem Selektivruf nicht enthaltene Gruppenruffrequenz auftritt.

Durch die in den Unteransprüchen aufgeführten Maßnahmen sind
vorteilhafte Weiterbildungen und Verbesserungen des im Hauptanspruch angegebenen Tonrufauswerters möglich.

Zeichnung

Ein Ausführungsbeispiel der Erfindung ist in der Zeichnung
anhand mehrerer Figuren dargestellt und in der nachfolgenden
Beschreibung näher erläutert. Die Zeichnung zeigt in

Fig. 1    ein vereinfachtes Blockschaltbild des erfindungsgemäßen Tonrufauswerters,

Fig. 2    a bis i
          eine Reihe von Signalspannungen an bestimmten
          Schaltungspunkten in Abhängigkeit von der Zeit
          und

Fig. 3    ein ausführlicheres Blockschaltbild des erfindungsgemäßen Tonrufauswerters.

Beschreibung der Erfindung

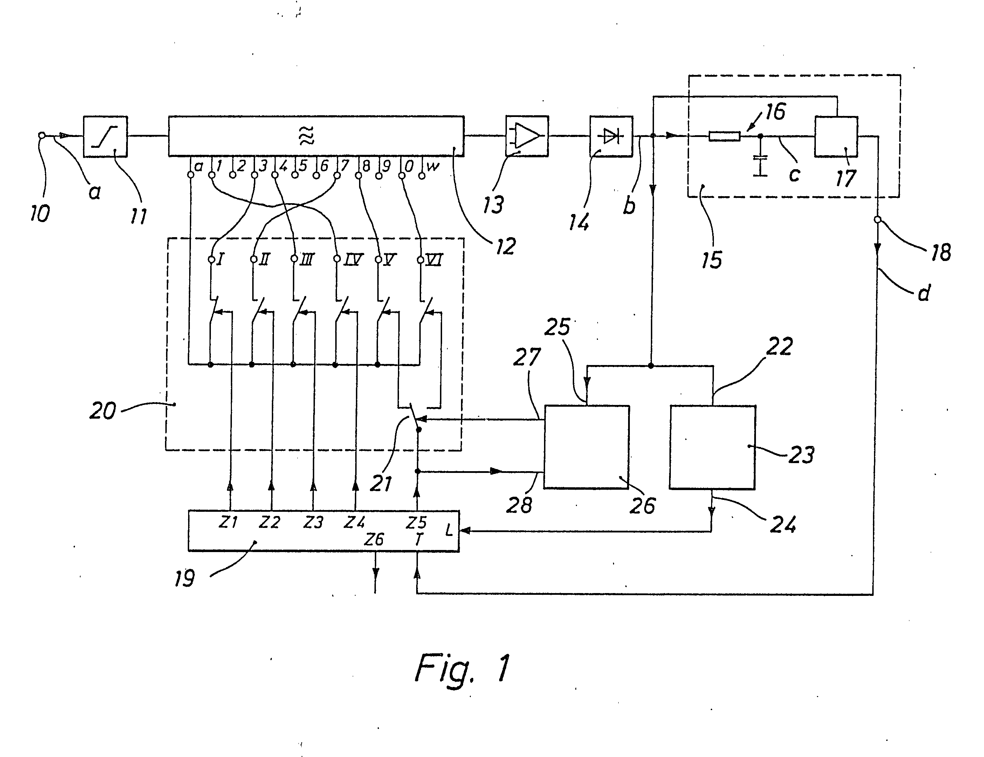

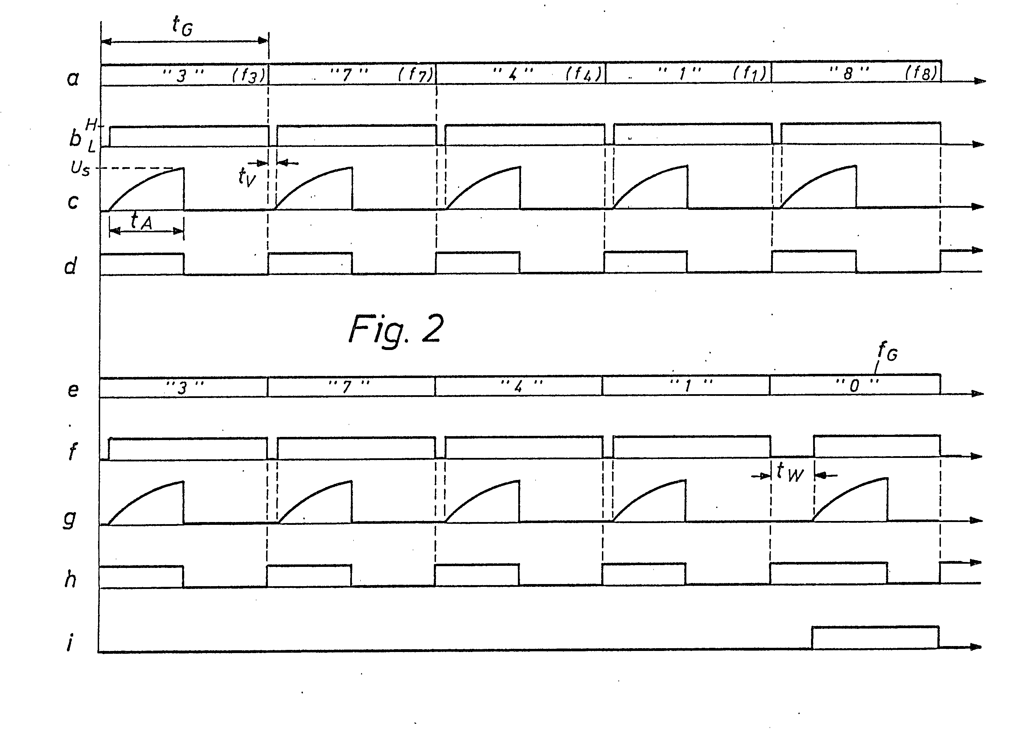

Ein erfindungsgemäßer Tonrufauswerter gemäß dem vereinfachten
Blockschaltbild in Fig. 1 dient zum Auswerten eines für einen
Funkempfänger charakteristischen Selektivrufs (vgl. Fig. 2 a)
oder eines Gruppenrufs für eine Gruppe von Funkempfängern
(vgl. Fig. 2 e). Der Selektivruf besteht aus fünf Tonfrequenzen entsprechend der für den betreffenden Funkempfänger
charakteristischen Ziffernfolge; vgl. Ziffernfolge "37418" in
Fig. 2 a. Jede Selektivruffrequenz wird mittels eines senderseitigen Gebers für eine bestimmte Dauer von zum Beispiel
70 ms ± 15 ms gesendet. Ein Gruppenruf unterscheidet sich von
einem Selektivruf dadurch, daß eine frei wählbare Stelle des
Selektivrufs, das ist in dem Beispiel nach Fig. 2 e die letzte
Stelle, durch eine der Ziffer "0" entsprechende Gruppenruffrequenz belegt ist, die an dieser Stelle in den Selektivrufen
des Sprechfunknetzes nicht vorkommt. Damit lassen sich alle
Sprechfunkgeräte, deren Rufkennzeichen mit der Ziffernfolge

"3741" beginnen, gemeinsam rufen (Zehner-Gruppe), sofern die
Selektivrufauswerter der Funkempfänger für die Auswertung
eines Gruppenrufs vorbereitet sind. Soll beispielsweise eine
Hunderter-Gruppe von Funkempfängern gerufen werden, so müßte
die Gruppenruffrequenz an der vierten Stelle des Selektivrufs
vorgesehen sein.

An einem mit 10 bezeichneten Eingang des zu einem Funkempfänger gehörenden Tonrufauswerters liefert ein in der Zeichnung
der Übersichtlichkeit halber weggelassenes Empfangsteil eines
Sprechfunkgerätes die modulierten Empfangssignale, zu denen
unter anderem auch Selektivrufe und Gruppenrufe gehören.

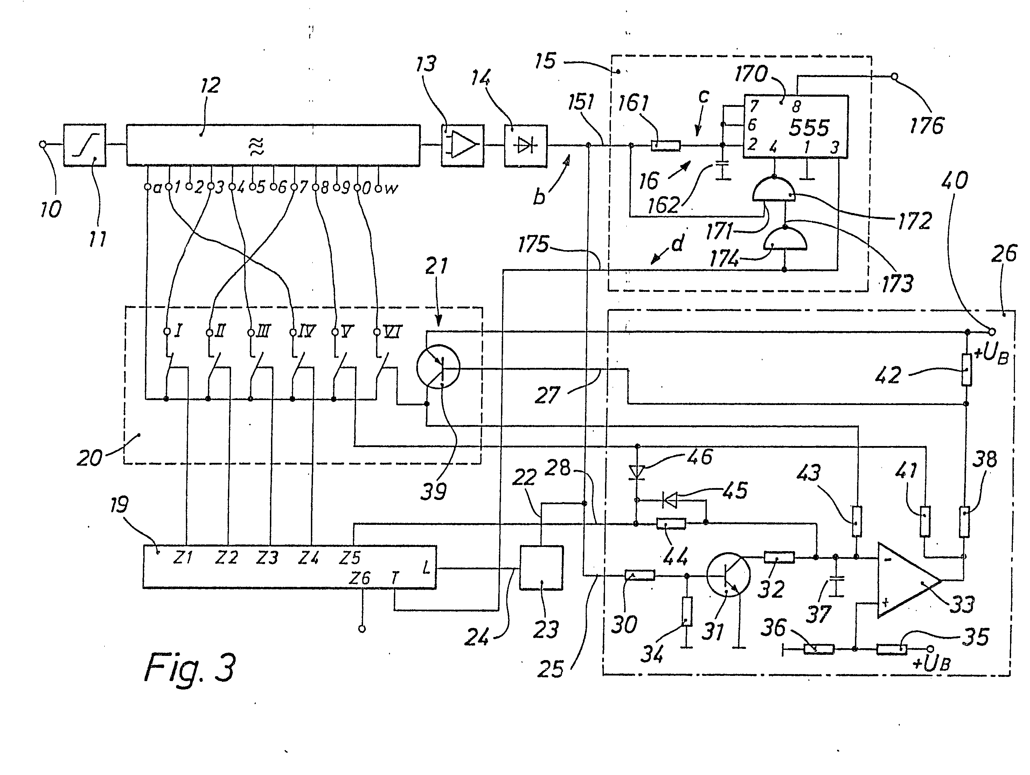

Der Eingang 10 des Tonrufauswerters ist über eine Begrenzerschaltung 11 mit dem Eingang eines Tonfrequenzfilters 12 verbunden, das zwölf Anschlüsse 1 bis 9, O, w und a aufweist. Das
Filter ist auf neun verschiedene Selektivruffrequenzen ($f_1$ bis
$f_9$), auf die Gruppenruffrequenz ($f_O$) und eine Wiederholfrequenz
($f_w$) umschaltbar. Der Anschluß a liegt auf dem Bezugspotential.
Der Ausgang des Filters 12 ist über einen Komparator 13 und
einen Gleichrichter 14 mit einer Triggerschaltung 15 verbunden,
deren Aufbau in Fig. 3 ausführlich dargestellt und deren Funktion weiter unten beschrieben ist. Die Triggerschaltung 15 enthält als wesentliche Bestandteile ein RC-Glied 16 und eine
Schwellspannungsschaltung 17, das ist vorzugsweise ein Timer
mit der Typenbezeichnung 555. Ein Ausgang 18 der Triggerschaltung 15 ist an einen Takteingang T eines Zählers 19 angeschlossen. Der Zähler weist sechs Ausgänge $Z_1$ bis $Z_6$ auf, von denen
die Ausgänge $Z_1$ bis $Z_5$ den fünf Frequenzen eines Fünftonfolge-
Selektivrufs bzw. des Gruppenrufs entsprechen. Eine Kodiereinrichtung 20 enthält sechs Schalter I bis VI, die vorzugsweise
als elektronische Schalter ausgebildet sind. Die Schalter I
bis IV werden von dem jeweiligen Potential an den Ausgängen $Z_1$
bis $Z_4$ des Zählers gesteuert. Die Schalter V und VI werden über
einen Umschalter 21 durch das Potential am Ausgang $Z_5$ des
Zählers gesteuert.

Die Schalter der Kodiereinrichtung 20 sind entsprechend der
Ziffernfolge bzw. der Tonfrequenzfolge des Selektivrufs bzw.
des Gruppenrufs mit den Anschlüssen des Filters 12 verbunden;
zum Beispiel liegt der Schalter I zwischen dem Anschluß a
und dem Anschluß 3 des Filters 12. In dem Ausführungsbeispiel
gemäß Fig. 1 ist der dem ersten Ausgang $Z_1$ des Zählers 19
zugeordnete Schalter I geschlossen, während alle anderen
Schalter geöffnet sind. Diese Schalterstellungen entsprechen
der Ausgangsposition, in der das Filter 12 auf die der Ziffer
"3" entsprechende Tonfrequenz $f_3$ abgestimmt ist.

Der Ausgang des Gleichrichters 14 ist weiterhin mit einem Eingang 22 eines Löschimpulsgebers 23 verbunden, der vorzugsweise
als Schalttransistor mit einem Zeitglied ausgebildet ist. Ein
Ausgang 24 des Löschimpulsgebers ist an einen Löscheingang L
des Zählers angeschlossen. Außerdem steht der Ausgang des
Gleichrichters 14 noch mit einem Eingang 25 einer Steuerungseinrichtung 26 in Verbindung, deren Aufbau und Wirkungsweise
weiter unten anhand der Fig. 3 erläutert wird. Ein Ausgang 27
der Steuerungseinrichtung steht mit dem Steuereingang des
Umschalters 21 in Verbindung. Ein weiterer Eingang 28 der
Steuerungseinrichtung ist mit dem Ausgang $Z_5$ des Zählers 19
verbunden. Von dem Ausgang $Z_6$ des Zählers 19 führt eine Verbindung zu einem in Fig. 1 nicht dargestellten NF-Verstärker mit
angeschlossenem Lautsprecher, der durch das Potential an dem
Ausgang $Z_6$ ein- bzw. ausgeschaltet wird.

Im folgenden wird die Wirkungsweise des in Fig. 1 dargestellten
Tonrufauswerters in Verbindung mit den Diagrammen in Fig. 2
erläutert. Das mit dem Funkempfänger empfangene und demodulierte
Empfangssignal wird zunächst in der Begrenzerschaltung 11 verstärkt, amplitudenbegrenzt und dem Eingang des Filters 12 zugeführt. Sobald die der eingestellten Kodierung entsprechende
erste Selektivruffrequenz eintrifft, entsteht am Ausgang des
Filters eine hohe Resonanzspannung, die die Schwellspannung des Komparators 13 überschreitet. Der Komparator formt die sinusförmige Signalspannung in Rechteckimpulse um, die der Gleichrichter 14 zu einem H(high)-Signal umformt; vgl. Fig. 2 b. Dadurch kann sich der Kondensator des RC-Gliedes 16 über dessen Widerstand bis zur Schwellspannung $U_S$ der Schwellspannungsschaltung 17 aufladen; vgl. Fig. 2 c. Die Zeit bis zum Erreichen der Schwellspannung entspricht der Auswertezeit $t_A$ für eine Selektivruffrequenz bzw. für die Gruppenruffrequenz. Überschreitet die Kondensatorspannung die Schwellspannung, so wird der Kondensator schlagartig über die Schwellspannungsschaltung 17 entladen. Der Ausgang 18 der Schwellspannungsschaltung schaltet dadurch vom H- auf das L(low)-Signal und bleibt solange auf dem L-Potential, wie eine Selektivruffrequenz erkannt wird; vgl. Fig. 2 d. Nach dem Wechsel von der Frequenz $f_3$ zu der Frequenz $f_7$ liegt zunächst keine Resonanzspannung am Ausgang des Filters. Der Komparator 13 liefert somit ebenso wie der Gleichrichter 14 an seinem Ausgang ein L-Signal. Dieses L-Signal steuert die Triggerschaltung 15 derart, daß sie einen positiven Triggerimpuls an den Takteingang T des Zählers 19 abgibt und diesen um eine Stelle weiterschaltet. Zu diesem Zeitpunkt liefert der Ausgang $Z_2$ des Zählers 19 ein H-Signal, während alle anderen Ausgänge ein L-Signal abgeben. Dieser Vorgang wiederholt sich nach der Auswertung einer jeden Selektivruffrequenz, und nach dem Wechsel von der vierten Selektivruffrequenz ($f_1$) auf die fünfte Selektivruffrequenz ($f_8$) liefert der Zähler 19 an seinem Ausgang $Z_5$ ein H-Signal, das über den Umschalter 21, der sich zu dieser Zeit in der aus Fig. 1 ersichtlichen Schalterstellung befindet, den Schalter V der Kodiereinrichtung 20 schließt und damit das Filter 12 auf die fünfte Selektivruffrequenz ($f_8$) umschaltet. Das H-Signal am Ausgang $Z_5$ des Zählers 19 gelangt außerdem an den Eingang 28 der Steuerungseinrichtung 26. Dadurch wird eine in der Steuerungseinrichtung enthaltene Verzögerungsschaltung gestartet. Die Verzögerungszeit $t_w$ (vgl. Fig. 2 f) beträgt zum Beispiel 15 ms. Stimmt die Kodierung der fünften Selektivruffrequenz $f_8$

mit der empfangenen Selektivruffrequenz überein, so liefert
der Gleichrichter 14 ein H-Signal. Mit diesem H-Signal wird
die Verzögerungsschaltung der Steuerungseinrichtung gestoppt
bzw. auf Null gesetzt. Am Ausgang 27 der Steuerungseinrichtung tritt dann keine Veränderung gegenüber dem Ausgangszustand ein, das heißt der Umschalter 21 behält die in
Fig. 1 gezeigte Schalterstellung bei. Die fünfte Selektivruffrequenz wird dann wie die vorhergehenden Selektivruffrequenzen
ausgewertet. Nach Beendigung der fünften Selektivruffrequenz
gibt der Zähler an seinem sechsten Ausgang $Z_6$ ein H-Signal,
wodurch der NF-Verstärker und Lautsprecher des Empfängers eingeschaltet werden.

Wird anstelle der im Tonrufauswerter kodierten Selektivruffrequenz der fünften Stelle eine Gruppenruffrequenz $f_G$ empfangen, dann liefert zunächst das Filter 12 keine Resonanzspannung. Der Gleichrichter 14 gibt in diesem Fall ein L-Signal ab
(vgl. Fig. 2 f). Erst wenn die Verzögerungszeit $t_w$ der
Steuerungseinrichtung 26 überschritten wird, schaltet der Ausgang 27 der Steuerungseinrichtung vom L-Signal auf das H-Signal
um. Das H-Signal steuert den Umschalter 21 in die andere
Schalterstellung um. Dadurch werden der Schalter V wieder
geöffnet und der Schalter VI geschlossen. Bei geschlossenem
Schalter VI ist das Filter auf die Gruppenruffrequenz abgestimmt. Das Filter liefert dann eine höhere Resonanzspannung.
Dadurch gibt der Gleichrichter 14 ein H-Signal ab, das jedoch
keinen Einfluß auf die Steuerungseinrichtung 26 ausübt, so daß
der Umschalter 21 in der zweiten Schalterstellung verharrt.
Dadurch kann die Gruppenruffrequenz in der gleichen Weise wie
die Selektivruffrequenzen ausgewertet werden; vgl. Fig. 2 g,
h und i. Nach Auswertung der an fünfter Stelle der Tonfolge
befindlichen Gruppenruffrequenz wird der Zähler 19 in die
sechste Zählstellung umgeschaltet, in der der Ausgang $Z_6$ ein
Signal zum Einschalten des NF-Verstärkerweges des Funkempfängers abgibt.

Der Löschimpulsgeber 23, das ist ein nachtriggerbares Monoflop, setzt den Zähler 19 nach 50 ms auf Null zurück. Vorher
hat jedoch das H-Signal am Ausgang $Z_6$ des Zählers ein in
Fig. 1 nicht gezeigtes Flipflop gesetzt, das den NF-Verstärkerweg eingeschaltet läßt, bis am Ende des Gesprächs durch
einen besonderen Schalter das Flipflop wieder in den Anfangszustand umgeschaltet wird.

Bei jeder erkannten Tonfrequenz liefert der Gleichrichter 14
ein H-Signal an den Eingang 22 des Löschimpulsgebers, der dadurch nachgetriggert wird. Der Löschimpulsgeber 23 hat eine
Standzeit von zum Beispiel 50 ms. Wird der Löschimpulsgeber
nicht nachgetriggert, so gibt er nach Ablauf seiner Standzeit
ein H-Dauersignal an den Löscheingang L des Zählers 19 ab.
Durch dieses H-Signal wird der Zähler in seine Nullstellung
zurückgeführt, in welcher der Ausgang $Z_1$ ein H-Signal abgibt
und das Filter 12 wieder auf die erste Selektivruffrequenz $f_3$
abgestimmt ist.

Die in Fig. 1 gezeigte und vorstehend beschriebene Schaltung
arbeitet also in der Weise, daß, sobald die ersten vier Stellen
ausgewerter sind, der Auswerter für die Auswertung der Frequenz
der fünften Stelle des Selektivrufs bzw. des Gruppenrufs
aktiviert wird. Trifft die an dieser Stelle erwartete Selektivruffrequenz innerhalb der Zeit $t_w$ nicht ein, so schaltet der
Tonrufauswerter automatisch auf die Auswertung der Gruppenruffrequenz um. Trifft die Gruppenruffrequenz ebenfalls nicht ein,
so schaltet der Löschimpulsgeber den Zähler 19 nach Ablauf
einer bestimmten Zeit, zum Beispiel nach 50 ms, in die Nullstellung zurück. Werden die Selektivruffrequenz oder die
Gruppenruffrequenz als richtig erkannt, so werden diese Frequenzen in der üblichen Weise ausgewertet.

4/80                          - 9 -

In Fig. 3 ist ein Schaltbild eines Selektivruf-/Gruppenruf-
Auswerters gezeigt, wobei die Steuerungseinrichtung 26 (vgl.
den durch strichpunktierte Linien umrahmten Schaltungsteil
in Fig. 3) und die Triggerschaltung 15 ausführlicher dargestellt sind.

Ein Eingang 151 der Triggerschaltung 15 steht erstens mit
dem Ausgang des Gleichrichters 14 und zweitens über einen
Widerstand 161 mit einem Triggereingang 2 eines Timers vom
Typ 555 in Verbindung. Der Triggereingang 2 ist mit einem
Entladungseingang 7 und mit einem Schwellenspannungseingang 6
verbunden. Die Eingänge 2, 6 und 7 sind über einen Kondensator 162 mit Masse verbunden. Der Widerstand 161 und der Kondensator 162 entsprechen dem RC-Glied in Fig. 1. Der Eingang
151 der Triggerschaltung steht außerdem mit einem ersten
Eingang 171 einer NAND-Schaltung 172 in Verbindung, deren
Ausgang an den Reset-Eingang 4 des Timers angeschlossen ist.
Ein zweiter Eingang 173 steht mit dem Ausgang eines Inverters
174 in Verbindung, dessen Eingang mit dem Ausgang 3 des
Timers 170 und mit einem Ausgang 175 in Verbindung steht. Ein
Anschluß 8 des Timers ist mit einem Anschluß 176 verbunden,
der mit dem positiven Pol einer Betriebsspannungsquelle in
Verbindung steht. Ein Eingang 1 des Timers liegt auf dem Massepotential.

Die Wirkungsweise der Triggerschaltung 15 nach Fig. 3 ist
folgende. Im Ruhezustand, das heißt, wenn der Funkempfänger
keine der ersten Selektivruffrequenz, zum Beispiel $f_3$ entsprechende Selektivruffrequenz, empfängt, gibt der Gleichrichter 14 ein L-signal und der Ausgang 3 des Timers 170 bzw.
der Ausgang 175 der Triggerschaltung 15 ein H-Signal ab. Der
Reset-Eingang 4 des Timers 170 erhält ein H-Signal.

Wird die erste kodierte Selektivruffrequenz, das heißt die
Frequenz $f_3$, erkannt, so liefert der Gleichrichter 14 ein
H-Signal; vgl. Fig. 2 b. Gleichzeitig lädt sich der Kondensa- tor 162 über den Widerstand 161 auf; vgl. Fig. 2 c. Sobald
die Kondensatorspannung nach der Auswertezeit $t_A$ von zum
Beispiel 30 ms (vgl. Fig. 2 c) den Schwellenspannungswert $U_s$
des Timers 170 überschreitet, entlädt sich der Kondensator
schlagartig über den Timer. Dadurch wechselt das Ausgangssignal am Ausgang 3 des Timers von H nach L; vgl. Fig. 2 d.
Dadurch liegt an den Eingängen der NAND-Schaltung 172 das
invertierte H-Signal des Ausgangs 3 des Timers und das
H-Signal vom Ausgang des Gleichrichters 14. Die NAND-Schaltung
gibt somit an den Reset-Eingang 4 des Timers ein L-Signal ab,
und zwar solange, wie der Gleichrichter ein H-Signal liefert.

Tritt mit dem Ablauf der Geberzeit $t_G$ von zum Beispiel 70 ms
ein Wechsel von der Selektivruffrequenz $f_3$ auf die Selektivruffrequenz $f_7$ auf, dann liefert der Gleichrichter zunächst, da
die Kodiereinrichtung 20 das Filter 12 noch nicht auf die
Selektivruffrequenz $f_7$ umgeschaltet hat, ein L-Signal. Somit
liegen an den Eingängen 171 und 173 der NAND-Schaltung 172 ein
L- und ein H-Signal, so daß die NAND-Schaltung an den Reset-
Eingang 4 des Timers 170 ein H-Signal abgibt. Der Wechsel vom
L- zum H-Signal bewirkt, daß der Ausgang 3 des Timers bzw. der
Ausgang 175 der Triggerschaltung einen positiven Taktimpuls an
den Takteingang T der Zählschaltung 19 abgibt.

Nach einer gewissen Verzögerungszeit $t_V$, die durch den Umschaltvorgang auf die zweite Selektivruffrequenz bedingt ist, erkennt
der Auswerter die zweite Frequenz. Der Gleichrichter 14 liefert
dann wieder ein H-Signal (vgl. Fig. 2 b), und der Kondensator
162 lädt sich wieder auf usw.

Die Steuerungseinrichtung 26 hat folgenden Aufbau. Der mit dem
Ausgang des Gleichrichters 14 verbundene Eingang 25 der
Steuerungseinrichtung 26 steht über einen Widerstand 30 mit der
Basis eines Transistors 31 in Verbindung. Der Kollektor dieses Transistors ist über einen Widerstand 32 mit dem invertierenden Eingang eines als Komparator 33 geschalteten Operationsverstärkers verbunden. Der Emitter des Transistors liegt unmittelbar und die Basis über einen Widerstand 34 an Masse. Der nicht-invertierende Eingang des Komparators 33 ist mit einer Anzapfung eines aus zwei Widerständen 35 und 36 bestehenden Spannungsteilers verbunden, der an der Betriebsspannung $U_B$ liegt. Die Widerstände 35 und 36 haben vorzugsweise den gleichen Widerstandswert. Ein Kondensator 37 liegt zwischen dem invertierenden Eingang des Komparators 33 und Masse. Der Ausgang des Komparators ist einerseits über einen Widerstand 38 mit dem Ausgang 27 der Steuerungseinrichtung 26 verbunden, an den die Basis eines Transistors 39 angeschlossen ist, der als Umschalter 21 (vgl. Fig. 1) verwendet wird. Der Emitter dieses Transistors ist mit einem Anschluß 40 verbunden, der das positive Potential der Betriebsspannungsquelle aufweist. Der Ausgang des Komparators 33 ist weiterhin über einen Widerstand 41 mit dem Steuereingang des Schalters V der Kodiereinrichtung 20 verbunden. Parallel zu der Basis-Emitterstrecke des Transistors 39 liegt ein Widerstand 42. Der Kollektor des Transistors 39 steht erstens mit dem Steuereingang des Schalters VI der Kodiereinrichtung 20 und zweitens über einen Widerstand 43 mit dem invertierenden Eingang des Komparators 33 in Verbindung. Von dem invertierenden Eingang führt eine weitere Verbindung über einen Widerstand 44 zu dem Ausgang $Z_5$ des Zählers 19. Der Widerstand 44 ist durch eine Diode 45 überbrückt, deren Anode mit dem invertierenden Eingang des Komparators in Verbindung steht. Die Kathode der Diode 45 steht über eine entgegengesetzt gepolte Diode 46 mit dem Steuereingang des Schalters V der Kodiereinrichtung 20 in Verbindung.

Die vorstehend beschriebene Schaltung hat folgende Wirkungsweise:

Im Ruhezustand weist der Ausgang $Z_1$ des Zählers 19 ein H-Signal auf. Alle anderen Ausgänge führen ein L-Signal. Der nichtvertierende Eingang des Komparators 33 liegt zum Beispiel
auf der halben Betriebsspannung. Der invertierende Eingang
erhält ein L-Signal. Dadurch führt der Komparatorausgang
ein H-Signal und sperrt damit den Transistor 39, der seinerseits den Schalter VI öffnet. Die Steuerung des Schalters V
wird durch die Diode 45 und das L-Signal am Ausgang $Z_5$ kurzgeschlossen.

Die Auswertung der ersten vier Selektivruffrequenzen geschieht
wie bei dem Ausführungsbeispiel in Fig. 1 beschrieben. Nachdem
die vierte Selektivruffrequenz ausgewertet wurde (Auswertezeit $t_A$), und nach dem Frequenzwechsel von der vierten auf die
fünfte Selektivruffrequenz führt der Ausgang $Z_5$ des Zählers 19
ein H-Signal. In diesem Fall wird die Diode 46 in Sperrrichtung vorgespannt. Der Schalter V der Kodiereinrichtung 20
erhält somit eine Steuerspannung, wodurch er geschlossen wird
und das Filter 12 auf die fünfte Selektivruffrequenz $f_8$
umschaltet. Gleichzeitig lädt sich durch das H-Signal am Ausgang $Z_5$ des Zählers 19 der Kondensator 37 über den Widerstand 44
auf. Stimmt die Selektivruffrequenz $f_8$ des Filters 12 mit der
gerade empfangenen Selektivruffrequenz überein, so führt der
Ausgang des Gleichrichters 14 ein H-Signal. Dadurch wird der
Transistor 28 über den Spannungsteiler aus den Widerständen
30 und 34 derart angesteuert, daß er in den Sättigungszustand
gelangt. Dadurch kann sich der Kondensator 37 über den
Spannungsteiler 44, 32 aufladen. Wird der Widerstandswert des
Widerstandes 32 kleiner gewählt als der Widerstandswert des
Widerstandes 44, so erreicht die Ladespannung des Kondensators 37
die Schwellwertspannung des Komparators 33 nicht, und dieser
verharrt in seiner ersten stabilen Lage. Die fünfte Selektivruffrequenz wird dann wie die übrigen Frequenzen ausgewertet.

Trifft an der fünften Stelle des Selektivrufes die fünfte
Selektivruffrequenz $f_8$ nicht ein, so liefert das auf die Selektivruffrequenz $f_8$ abgestimmte Filter 12 zunächst keine Resonanzspannung. Dadurch liefert der Gleichrichter 14 ein L-Signal an den Eingang 25 der Steuerungseinrichtung 26. Das H-Signal am
Ausgang $Z_5$ des Zählers 19 bewirkt über den Widerstand 44 eine
Aufladung des Kondensators 37. Nach einer Wartezeit $t_w$ von
zum Beispiel 15 ms erreicht die Kondensatorspannung die
Schwellwertspannung des Komparators 33. Dessen Ausgang liefert
dann ein L-Signal, das über den Widerstand 38 den Transistor 39,
das ist ein pnp-Transistor, in den Sättigungszustand überführt.
Über den Widerstand 43 kann sich dann der Kondensator 37 weiter
aufladen. Der Schalter VI der Kodiereinrichtung 20 wird über
den Transistor 39 derart angesteuert, daß er schließt und damit
das Filter 12 auf die Gruppenruffrequenz $f_G$ abstimmt. Empfängt
der Tonrufauswerter nun die Gruppenruffrequenz, so liefert der
Gleichrichter 14 ein H-Signal, durch das der Transistor 31 in
den Sättigungszustand gesteuert wird. In diesem Zustand kommt
ein Spannungsteiler zur Wirkung, der aus der Parallelschaltung
der Widerstände 44 und 43 in Reihe mit dem Widerstand 32 besteht.

Der Widerstandswert der Parallelschaltung aus den Widerständen
43, 44 wird vorzugsweise kleiner gewählt als der Widerstandswert des Widerstandes 32. Dadurch gibt der Ausgang des Komparators 33 weiterhin ein L-Signal ab, und der Gruppenruf kann
ausgewertet werden.

Wird an der fünften Stelle eines Tonrufs weder die Selektivruffrequenz noch die Gruppenruffrequenz empfangen, so gibt der
Löschimpulsgeber 23 nach ca. 50 ms ein H-Signal an den Löscheingang L des Zählers 19 ab, der dadurch in seine Nullstellung
zurückgeführt wird, in der der Ausgang $Z_1$ ein H-Signal abgibt.
Die Ladung des Kondensators 37 kann dann über die Diode 45 und
den Ausgang $Z_5$ des Zählers, der dann ein L-Signal abgibt, abfließen. Der Komparator 33 schaltet dann wieder in seine Ausgangsstellung zurück.

4/80
EK/PLI Scht/Li
11. März 1980

ROBERT BOSCH GMBH, 7000 Stuttgart 1


<u>Ansprüche</u>


1. Verfahren zum Auswerten von mehrstelligen Tonfolge-
Selektivrufen, die für je einen Funkempfänger charakteristisch sind und deren einzelne Stellen durch je eine diskrete Selektivruffrequenz belegt sind, und zum Auswerten
eines für eine Gruppe von mehreren Funkempfängern bestimmten Gruppenrufs, der an einer frei wählbaren Stelle des
Selektivrufs eine besondere, sich von den Selektivruffrequenzen unterscheidende Gruppenruffrequenz aufweist,
mit Hilfe eines auf die Selektivruffrequenzen und die
Grupenruffrequenz abstimmbaren Filters, das nach jedem
Wechsel einer als richtig erkannten Selektivruffrequenz
mittels einer elektronischen Zählschaltung auf die nächste
Selektivruffrequenz umgeschaltet wird und an der frei wählbaren Stelle von der Selektivruffrequenz auf die Gruppenruffrequenz umgeschaltet wird, wenn die an dieser Stelle
erwartete Selektivruffrequenz nicht erkannt wird, dadurch
gekennzeichnet, daß mit dem Wechsel von der vor der gewählten Stelle vorgesehenen Selektivruffrequenz auf die an der
gewählten Stelle vorgesehene Selektivruffrequenz eine
bestimmte, im Vergleich zu der Auswertezeit ($t_A$) kurze,
aber zur Erkennung der Frequenz mit Sicherheit ausreichende
Wartezeit ($t_W$) beginnt, innerhalb der die erwartete Selektivruffrequenz entweder erkannt oder nicht erkannt wird,
und daß beim Erkennen der Selektivruffrequenz die normale
Auswertung stattfindet und beim Nichterkennen nach einer
Erkennungszeit das Filter (12) automatisch auf die Gruppenruffrequenz ($f_G$) umgeschaltet und in dieser Stellung festgehalten wird und daß bei erkannter Gruppenruffrequenz die
normale Auswertung der Gruppenruffrequenz stattfindet.

2. Tonrufauswerter zur Durchführung des Verfahrens nach
   Anspruch 1, dadurch gekennzeichnet, daß die Zählschaltung
   je Stelle des Selektivrufs einen Ausgang ($Z_1$ ... ) hat,
   daß die Ausgänge mit Ausnahme des der gewählten Stelle entsprechenden Ausgangs ($Z_5$) mit je einem Schalter (I ...)
   verbunden sind, mit dem das Filter (12) auf je eine Selektivruffrequenz umschaltbar ist, daß der der gewählten
   Stelle des Selektivrufs entsprechende Ausgang über einen
   Umschalter (21) mit jeweils einem Schalter von zwei Schaltern (V, VI) verbindbar ist, von denen der eine Schalter (V)
   eine das Filter auf die an der gewählten Stelle vorgesehene
   Selektivruffrequenz und der andere Schalter (VI) das Filter
   auf die Gruppenruffrequenz umschaltet.

3. Tonrufauswerter nach Anspruch 2, dadurch gekennzeichnet,
   daß die Schalter (I ...) und der Umschalter (21) elektronische Schalter sind und gemeinsam eine Kodiereinrichtung (20)
   bilden.

4. Tonrufauswerter nach Anspruch 2, dadurch gekennzeichnet,
   daß dem Umschalter (21) eine Steuerungseinrichtung (26, 28)
   mit einem Ausgang (27) zugeordnet ist, daß ein Eingang (25)
   mit dem Ausgang des Gleichrichters (14), der andere Eingang (28) mit dem der gewählten Stelle des Selektivrufs entsprechenden Ausgang ($Z_5$) des Zählers (19) und der Ausgang (27)
   mit dem Steuereingang des Umschalters verbunden ist, daß der
   Zähler in der der gewählten Stelle des Selektivrufs entsprechenden Zählerstellung die Steuerungseinrichtung derart
   aktiviert, daß der Umschalter eine erste Stellung einnimmt,
   in welcher der der gewählten Stelle entsprechende Ausgang ($Z_5$)
   des Zählers mit dem Steuereingang des der Selektivruffrequenz dieser Stelle entsprechenden Schalters (V) der Kodiereinrichtung (20) verbunden ist und daß die Steuerungseinrichtung den Umschalter in eine zweite Stellung, in welcher
   der der gewählten Stelle entsprechende Ausgang des Zählers mit dem Steuereingang des der Gruppenruffrequenz dieser
Stelle entsprechenden Schalters (VI) verbunden ist,
umschaltet, sofern die Selektivruffrequenz der gewählten
Stelle innerhalb der durch die Steuerungseinrichtung
vorgegebenen Wartezeit ($t_W$) nicht eintrifft.

5. Tonrufauswerter zur Durchführung des Verfahrens nach
Anspruch 1, dadurch gekennzeichnet, daß eine Triggerschaltung (15) vorgesehen ist, deren Eingang mit dem Ausgang
eines Gleichrichters (14) in Verbindung steht und deren
Ausgang (18, 175) mit dem Triggereingang (T) des Zählers
(19) verbunden ist.

6. Tonrufauswerter nach Anspruch 5, dadurch gekennzeichnet,
daß die Steuerungseinrichtung (26) einen Komparator (33)
aufweist, an dessen nichtinvertierendem Eingang eine
Schwellenwertspannung liegt und dessen invertierender
Eingang über einen Kondensator (37) mit Masse und über
einen Widerstand (44) mit dem der gewählten Stelle des
Selektivrufs entsprechenden Ausgang ($Z_5$) des Zählers (19)
verbunden ist.

7. Tonrufauswerter nach Anspruch 5 oder 6, dadurch gekennzeichnet, daß die Anode einer Diode (46) einerseits mit
dem Ausgang des Komparators (33) und andererseits mit dem
Steuereingang des der Selektivruffrequenz an der gewählten
Stelle entsprechenden Schalters (V) der Kodiereinrichtung
(20) verbunden ist und daß die Kathode der Diode mit dem
der gewählten Stelle des Selektivrufs entsprechenden Ausgang ($Z_5$) des Zählers verbunden ist, der bei dem der gewählten Stelle des Selektivrufs entsprechenden Zählschritt ein
H-Signal abgibt.

8. Tonrufauswerter nach Anspruch 2 oder 5, dadurch gekennzeichnet, daß das Filter (12) über einen Komparator (13)
mit einem Gleichrichter (14) verbunden ist, der beim
Erkennen einer Selektivruffrequenz oder der Gruppenruffrequenz ein H-Signal abgibt, und daß der Ausgang des
Gleichrichters mit der Basis eines Transistors (31) der
Steuerungsschaltung (26) verbunden ist, dessen Kollektor
über einen Widerstand (32) an den invertierenden Eingang
des Komparators (33) und dessen Emitter an Masse angeschlossen ist.

9. Tonrufauswerter nach einem der Ansprüche 5 bis 8, dadurch
gekennzeichnet, daß der Ausgang des Komparators (33) über
zwei einen Spannungsteiler bildende Widerstände (38, 42)
mit dem positiven Betriebsspannungspotential verbunden
ist und daß ein Abgriff des Spannungsteilers mit der
Basis eines Transistors (39) verbunden ist, der zu der
Kodiereinrichtung (20) gehört, dessen Emitter mit dem
positiven Betriebsspannungspotential verbunden ist und
dessen Kollektor mit dem Steuereingang des der Gruppenruffrequenz entsprechenden Schalters (VI) sowie über einen
Widerstand (43) mit dem invertierenden Eingang verbunden
ist.

10. Tonrufauswerter nach einem der Ansprüche 5 bis 9, dadurch
gekennzeichnet, daß der Widerstandswert des Widerstandes
(32) kleiner ist als der Widerstandswert des Widerstandes
(44).

11. Tonrufauswerter nach einem der Ansprüche 5 bis 9, dadurch
gekennzeichnet, daß der Widerstandswert der Parallelschaltung aus den Widerständen (43, 44) kleiner ist als der
Widerstandswert des Widerstandes (32).

- 5 -

12. Tonrufauswerter nach Anspruch 5, dadurch gekennzeichnet, daß die Triggerschaltung (15) bei einem Zähler (19), der bei jeder positiven Flanke um einen Zählschritt weiterschaltet, am Ausgang (18, 175) im Ruhezustand ein H-Signal abgibt, daß bei Ablauf der Auswertezeit, die kürzer als die Dauer für eine Selektivruffrequenz bzw. Gruppenruffrequenz ist, der Ausgang auf ein L-Signal umgeschaltet wird und daß das L-signal solange erhalten bleibt, bis eine Selektivruffrequenz oder Gruppenruffrequenz erkannt ist, und daß der Ausgang der Triggerschaltung ein H-Signal abgibt, wenn die Selektivruffrequenz oder Gruppenruffrequenz beendet ist.

13. Tonrufauswerter nach Anspruch 5 oder 11, dadurch gekennzeichnet, daß die Triggerschaltung (15) einen Timer (17, 170) enthält, dessen Triggereingang (2) über ein Zeitkonstantenglied (16) mit dem Ausgang des Gleichrichters (14) und dessen Ausgang (3) mit dem Ausgang (18, 175) der Triggerschaltung und mit dem Takteingang (T) des Zählers (19) verbunden ist.

14. Tonrufauswerter nach Anspruch 5, 12 und 13, dadurch gekennzeichnet, daß der Triggereingang (2), der Triggerschwelleneingang (6) und der Entladeeingang (7) des Timers (170) gemeinsam über einen Widerstand (161) mit dem Ausgang des Gleichrichters (14) sowie über einen Kondensator (162) mit Masse verbunden sind, daß der Ausgang (3) des Timers mit dem Ausgang (175) der Triggerschaltung sowie über einen Inverter (174) mit einem Eingang (173) einer NAND-Schaltung (172) verbunden sind, deren anderer Eingang (171) mit dem Ausgang des Gleichrichters (14) und deren Ausgang mit dem Reset-Eingang (4) des Timers verbunden ist.

Fig. 1

0035592

Fig. 2

Fig. 3

| | | | Nummer der Anmeldung |
|---|---|---|---|
| ◉ Europäisches Patentamt | **EUROPÄISCHER RECHERCHENBERICHT** | | EP 80 10 6943 |

| **EINSCHLÄGIGE DOKUMENTE** | | | KLASSIFIKATION DER ANMELDUNG (Int Cl³) |
|---|---|---|---|
| Kategorie | Kennzeichnung des Dokuments mit Angabe, soweit erforderlich, der maßgeblichen Teile | betrifft Anspruch | |
| X | DE - A - 2 129 386 (AGA AB) <br> * Seite 9, Zeile 23 bis Seite 11, Zeile 6; Figuren 4 bis 6 * <br><br> ---- | 1-5 | H 04 Q 7/00 <br><br><br> RECHERCHIERTE SACHGEBIETE (Int Cl.³) <br><br> H 04 Q 7/00 <br> 7/02 <br> 7/04 |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsatze
E: kollidierende Anmeldung
D: in der Anmeldung angeführtes Dokument
L: aus andern Grunden angeführtes Dokument
&: Mitglied der gleichen Patent-familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 12.06.1981 | WANZEELE |

EPA form 1503.1   06.78